# EUROPÄISCHE PATENTSCHRIFT

(11) **EP 1 467 229 B1**
(45) Veröffentlichungstag und Bekanntmachung des Hinweises auf die Patenterteilung: **27.06.2007**
(21) Anmeldenummer: 04008479.0
(22) Anmeldetag: 07.04.2004
(51) Int. Cl.: G02F 1/13357, G02B 6/00, F24C 7/08, G06F 1/16

(54) **Anzeigeeinheit für ein Haushaltsgerät**
Display for a household appliance
Dispositif d'affichage pour appareil ménager

(30) Priorität: 07.04.2003 DE 10315773
(43) Veröffentlichungstag der Anmeldung: 13.10.2004
(73) Patentinhaber: BSH Bosch und Siemens Hausgeräte GmbH, 81739 München (DE)
(72) Erfinder: Fleissner, Reinhard, 83352 Altenmarkt (DE); Huber, Ernst, 83308 Trostberg (DE); Meierhofer, Rudolf, 83352 Altenmarkt (DE); Neuhauser, Maximilian, 83339 Chieming (DE); Plankl, Manfred, 83301 Traunreut (DE); Uglorz, Helmut, 89555 Steinheim (DE); Ulmer, Michael, 83301 Traunreut (DE); Zenz, Konrad, 83339 Chieming (DE)

(56) Entgegenhaltungen:
- EP-A- 0 009 249
- WO-A-99/22177
- GB-A- 2 361 087
- US-A- 4 616 295
- US-A- 5 666 172

## Beschreibung

Die Erfindung geht aus von einer Anzeigeeinheit für ein Haushaltsgerät.

Ein Haushaltsgerät, wie beispielsweise ein Herd, eine Spülmaschine, ein Kühlschrank oder ein Mikrowellengerät, weist üblicherweise eine Anzeigeeinheit auf, auf der für einen Bediener Daten zum Status des Haushaltsgeräts, die Uhrzeit, Funktionswahlmöglichkeiten und weitere Informationen angezeigt sein können. Eine solche Anzeigeeinheit ist in der Regel an der dem Bediener zugewandten Front des Haushaltsgeräts angeordnet. Hinter einer solchen Front angeordnete Geräteelemente, wie beispielsweise eine Kochmulde, eine Backmuffel oder ein Element eines das Haushaltsgerät umgebenden Küchenmöbels, können durch ihre Position und Abmessung erzwingen oder es zumindest von Vorteil sein lassen, wenn die zwischen einem Bediener und dem Element angeordnete Front zumindest bereichsweise dünn ausgeführt ist. Eine solche Anforderung kann insbesondere bei einem Einbaugerät auftreten, bei dem die Gerätefront in ihrer Position analog angeordnet ist, wie das Haushaltsgerät umgebende Küchenmöbelfronten, beispielsweise Küchenschranktüren. Hierbei kann im Inneren des Möbels und somit hinter der Gerätefront eine Anschlagleiste sein, die beispielsweise als Anschlag für eine Möbeltür gedacht ist. In einem solchen Fall sollte die Front des Haushaltsgeräts zumindest im Bereich der Anschlagleiste nicht dicker ausgeführt sein, als eine dem Haushaltsgerät benachbarte Küchenmöbeltür. Bei einer Anordnung einer Anzeigeeinheit des Haushaltsgeräts in einem solchen Bereich darf auch die Anzeigeeinheit nicht dicker sein, als eine benachbarte Küchenmöbeltür.

Aus der DE 198 09 558 C2 ist eine Anzeigeeinheit für ein Haushaltsgerät bekannt, die ohne Steuereinheit und ohne Netzteil ausgeführt ist und auf diese Weise besonders flach ausgeführt werden kann.

Aus der US 5,666,172 ist eine Anzeigeeinheit mit einem Lichtleiter und einer Platine bekannt.

Ferner ist aus der WO 99/22177 ein Haushaltsgerät mit einer Frontblende und einem Blendenrahmen bekannt.

Die Aufgabe der Erfindung besteht darin, eine gattungsgemäße Anzeigeeinheit weiterzuentwickeln, und zwar insbesondere hinsichtlich der Möglichkeit zur Anordnung in einem flachen Bauraum.

Diese Aufgabe wird erfindungsgemäß durch die Merkmale des Patentanspruchs 1 gelöst. Vorteilhafte Ausgestaltungen und Weiterbildungen der Erfindung können den Unteransprüchen entnommen werden.

Die Erfindung geht aus von einer Anzeigeeinheit für ein Haushaltsgerät, insbesondere für ein Gargerät, mit einem Anzeigefeld und einer Lichtquelle.

Es wird vorgeschlagen, dass die Anzeigeeinheit einen Lichtleiter umfasst, der zur Leitung von Licht von der Lichtquelle zum Anzeigefeld vorgesehen ist. Die Lichtquelle muss somit nicht mehr unmittelbar hinter dem Anzeigefeld angeordnet sein, sondern kann schräg versetzt, seitlich vom Anzeigefeld oder in einer größeren Entfernung zum Anzeigefeld platziert werden. Der bisher hinter der Anzeigeeinheit vorgesehene Bauraum für eine Lichtquelle kann zumindest teilweise eingespart und die Anzeigeeinheit sehr flach ausgeführt werden.

Das Anzeigefeld kann ein musterbildendes Element sein, wie beispielsweise eine Anzeigemaske mit lichtdurchlässigen und lichtundurchlässigen oder verschiedenfarbigen Zonen. Die Muster können im Anzeigefeld fest angeordnet oder schaltbar wechselnd ausgestaltet sein. Als Lichtquelle kann ein beliebiges lichtaussendendes Bauelement verwendet werden, wobei ein Lumineszenzelement und speziell eine Licht emittierende Diode durch eine kleine Bauart vorteilhaft sind.

Eine besonders preiswerte und störunanfällige Bauart der Anzeigeeinheit wird erreicht, wenn das Anzeigefeld und der Lichtleiter flächig ausgebildet und parallel zueinander ausgerichtet sind. Der Lichtleiter weist hierbei zweckmäßigerweise mit einer seiner flachen Seiten zum Anzeigefeld, wodurch dieses durch den Lichtleiter besonders gleichmäßig ausgeleuchtet werden kann. Der Lichtleiter ist zweckmäßigerweise in seiner flächigen Ausdehnung größer oder zumindest im Wesentlichen gleich groß wie ein Musterfeld des Anzeigefelds, wobei das Musterfeld die Fläche des Anzeigefelds umfasst, in der die auszuleuchtenden Muster des Anzeigefelds angeordnet sind. Es können hierbei mit einem Lichtleiter in einfacher Weise sämtliche Muster ausgeleuchtet werden.

Eine flache Bauart und preisgünstige Ausführung der Anzeigeeinheit wird dadurch erreicht, dass die Lichtquelle an einer seitlichen Schmalseite des Lichtleiters angeordnet ist.

Der Lichtleiter kann auf diese Weise gut ausgeleuchtet werden. Außerdem führt eine solche Positionierung nicht zwangsweise zu einer Vergrößerung der Tiefe der Anzeigeeinheit, also zu einer senkrecht zum Anzeigefeld vergrößerten Bauform. Weiterhin ist die Lichtquelle zweckmäßigerweise unmittelbar am Lichtleiter angeordnet, so dass eine zusätzliche Lichtzuführung von der Lichtquelle zum Lichtleiter entfällt. Die Lichtquelle kann in die Schmalseite des Lichtleiters sichtbares Licht einstrahlen, das aus der dem Anzeigefeld zugewandten flachen Seite des Lichtleiters zum Anzeigefeld hin wieder ausstrahlen kann.

Durch die Anordnung von mehreren Lichtquellen an einer seitlichen Schmalseite des Lichtleiters kann der Lichtleiter vorteilhafterweise besonders gleichmäßig ausgeleuchtet werden. Es ist auch denkbar, dass Lichtquellen an zwei oder mehr Schmalseiten des Lichtleiters angeordnet sind und durch diese Schmalseiten in den Lichtleiter hineinstrahlen.

Vorteilhafterweise ist das Anzeigefeld durch eine Flüssigkristallanzeige gebildet. Das Anzeigefeld kann preiswert ausgeführt sein und erlaubt das Abdecken von Bereichen des Lichtleiters, so dass bei sogar nur einem einzigen flächig ausgestrahlten Lichtleiter eine große Vielfalt der Musterbildung möglich ist. Die Flüssigkristallanzeige weist eine Schicht mit Flüssigkristallen auf, die in eine Mehrzahl von separat schaltbaren Bereichen aufgeteilt ist. Jeder Bereich ist hierbei je nach Schaltung, also je nach angelegter elektrischer Spannung, mehr oder weniger lichtdurchlässig.

In einer weiteren Ausgestaltung der Erfindung wird vorgeschlagen, dass zwischen dem Anzeigefeld und dem Lichtleiter eine Lichtstreuvorrichtung, insbesondere eine Streufolie, angeordnet ist. Hierdurch wird eine besonders gleichmäßige Ausleuchtung der auf dem Anzeigefeld angeordneten Muster erreicht.

Bevorzugt sind das Anzeigefeld und der Lichtleiter in Sandwichbauweise miteinander verbunden. Es kann eine besonders flache Bauart der Anzeigeeinheit erreicht werden. Das Anzeigefeld und der Lichtleiter sind hierbei flach ausgeführt und mit jeweils einer ihrer flachen Seiten unmittelbar oder mittelbar nebeneinander angeordnet und zweckmäßigerweise form-, stoff- oder kraftschlüssig miteinander verbunden. Zwischen dem Anzeigefeld und dem Lichtleiter kann auch die Lichtstreuvorrichtung angeordnet sein, so dass auf diese Weise drei flache Bauteile und ggf. weitere zwischen oder außerhalb den genannten drei Bauteilen angeordnete weitere Bauteile aneinander anliegend, also in Sandwichbauweise, ausgeführt sind.

Vorteilhafterweise ist eine die Lichtquelle tragende Leiterplatte parallel zum Lichtleiter angeordnet. Die Leiterplatte trägt zur Anzeigeeinheit zugehörige Elektronikbauteile, die auf diese Weise sehr nah und in platzsparender Weise am Lichtleiter und am Anzeigefeld angeordnet sind. Zwischen dem Lichtleiter und der Leiterplatte kann eine Reflektorfolie angeordnet sein, die aus dem Lichtleiter und zur Leiterplatte hin ausstrahlendes Licht wieder in den Lichtleiter zurück reflektiert. Hierdurch kann die Helligkeit der Ausstrahlung des Anzeigefelds erhöht und ein Hindurchblicken eines Bedieners durch das Anzeigefeld direkt auf die Leiterplatte verhindert werden.

Die Anzeigeeinheit weist einen ersten in der Bauform flacheren Bereich und einen zweiten in der Bauform tieferen Bereich auf, wobei der erste flachere Bereich in seiner Größe und Position an von außen vorgegebene Bauraumeinschränkungen angepasst werden kann. Die Anzeigeeinheit kann somit in einen flachen Bauraum hinein erstreckt werden, ohne dass die gesamte Anzeigeeinheit flach ausgeführt sein müsste. Das Gehäuse kann ein speziell zur Anzeigeeinheit zugehöriges Gehäuse oder ein Element eines anderen Elements des Haushaltsgeräts, wie z. B. ein Abdeckblech einer Kochmulde oder einer Backmuffel, sein. Hierbei ist es nicht notwendig, dass das Gehäuse den ersten und/oder zweiten Bereich vollständig abschließt, sondern es ist ausreichend, wenn das Gehäuse einen Bereich in zumindest eine Raumrichtung begrenzt und die Anzeigeeinheit somit vor Einflüssen aus dieser Raumrichtung schützt. Das Anzeigefeld ist flach ausgeführt, wobei eine Flachseite des Anzeigefelds eine Ebene bildet. Senkrecht zu dieser Ebene und damit senkrecht zum Anzeigefeld ist dieser Ebene eine Flächennormale zugeordnet.

Die Anzeigeeinheit umfasst einen Lichtleiter, der zur Leitung von Licht von der Lichtquelle zum Anzeigefeld vorgesehen ist. Der bisher hinter der Anzeigeeinheit vorgesehene Bauraum für eine Lichtquelle kann zumindest teilweise eingespart und die Anzeigeeinheit sehr flach ausgeführt werden.

Eine besonders flache Bauweise der Anzeigeeinheit kann erreicht werden, wenn die Leiterplatte zumindest im ersten Bereich nur einseitig mit Elektronikbauteilen bestückt ist. Die Leiterplatte inklusive der Elektronikbauteile ist auf diese Weise sehr dünn ausführbar.

Ein weiterer Vorteil wird erreicht, wenn die Leiterplatte im ersten Bereich nur auf der dem ersten Abschnitt abgewandten Seite mit Elektronikbauteilen bestückt ist. Die Leiterplatte weist somit keine direkt dem ersten Abschnitt des Gehäuses zugewandten Elektronikbauteile auf, wodurch auf einen Sicherheitsabstand zwischen der Leiterplatte und dem Gehäuse, der zur Verhinderung von Kriechströmen notwendig wäre, zumindest weitgehend verzichtet werden kann. Die Leiterplatte kann sehr dicht am Gehäuse angeordnet und die Anzeigeeinheit flach ausgeführt werden.

Das Anzeigefeld und insbesondere der Lichtleiter erstreckt sich vom zweiten in den ersten Bereich erstreckt. Es kann somit auch ein durch äußere Umstände in der Größe eingeschränkter Bauraum zur Aufnahme des Anzeigefelds genutzt werden.

Eine besonders gute Ausleuchtung eines im ersten Bereich oder in der Nähe des ersten Bereichs angeordneten Anzeigefelds kann dadurch erreicht werden, dass die Leiterplatte zumindest im ersten Bereich eine Lichtquelle trägt.

Ein weiterer Vorteil der Erfindung wird erreicht, indem die Leiterplatte im zweiten Bereich beidseitig mit Elektronikbauteilen bestückt ist. Hierdurch kann eine geringe Leiterplattenfläche und damit eine kompakte Bauweise der Anzeigeeinheit erreicht werden.

Ein besonders einfacher Einbau der Anzeigeeinheit in flache Einbaubereiche kann erreicht werden, da die Anzeigeeinheit im ersten Bereich maximal 22 mm, insbesondere maximal 19 mm, dick ist. Die Dicke bezieht sich hierbei auf die Ausdehnung der Anzeigeeinheit senkrecht zum Anzeigefeld. Eine solche Dicke entspricht der Dicke üblicher Möbelbretter oder Möbeltüren. Die Anzeigeeinheit kann daher im Bereich von Anschlägen für Möbelbretter oder Möbeltüren angeordnet werden, ohne dass sie weiter als benachbarte Möbelbretter oder Möbeltüren in die Umgebung hinausragt.

Bei einer Anordnung des ersten flachen Bereichs entlang einer Kante der Anzeigeeinheit, insbesondere entlang der ganzen Kante, kann die Anzeigeeinheit entlang dieser Kante in einen schmalen Bauraum eingefügt werden. Hierbei ist die Anzeigeeinheit zweckmäßigerweise im Haushaltsgerät vertikal angeordnet, wobei die Kante nach oben weisend ausgerichtet ist. Die Anzeigeeinheit ist so im obersten Bereich der Front des Haushaltsgeräts platzierbar und der obere und besonders gut sichtbare Randbereich der Front kann zur Platzierung der Anzeige genutzt werden.

Vorzugsweise ist eine mit der Leiterplatte verbundene Zusatzleiterplatte im zweiten Bereich angeordnet. Hierdurch können für die Anzeigeeinheit notwendige Elektronikbauteile in einem Bereich außerhalb des ersten Bereichs angeordnet sein, so dass die Anzeigeeinheit auch bei einem weit ausgedehnten ersten Bereich mit relativ wenigen Elektronikbauteilen im ersten Bereich auskommen kann. Der erste Bereich kann besonders schmal ausgeführt werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: eine schematische Schnittdarstellung durch eine Anzeigeeinheit am oberen Ende einer Front eines Haushaltsgeräts und
- Fig. 2: eine schematische Detailansicht der Anzeigeeinheit von der Seite.

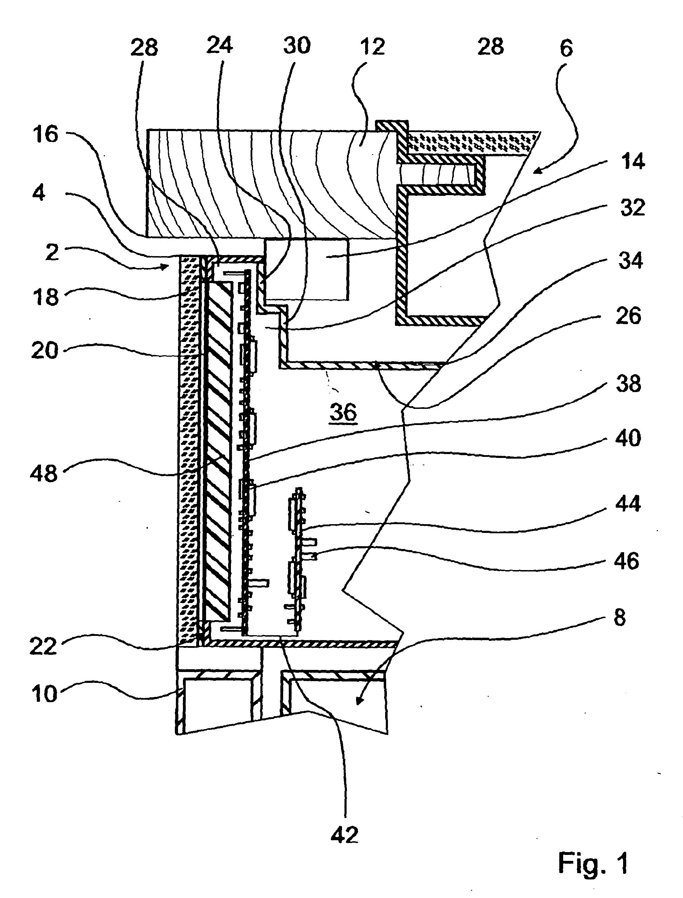

In Fig. 1 ist eine Anzeigeeinheit 2 dargestellt, die an einer oberen Kante 4 einer Front eines Herdes angeordnet ist. Der Herd ist ein Einbauherd mit einer Kochmulde 6, einer Ofenmuffel 8 und einer Tür 10, die nur sehr schematisch angedeutet sind. Die Kochmulde 6 ist in eine Arbeitsplatte 12 eingelassen, an deren Unterseite eine Leiste 14 befestigt ist. Die Leiste 14 befindet sich in einer standardisierten Position mit einem Abstand von 26 mm von einer vorderen Kante 16 der Arbeitsplatte 12. Von dieser Strecke stehen 19 mm der Oberseite der Front des Herdes zur Verfügung und 7 mm sind als Überstand der Arbeitsplatte 12 über die Front vorgesehen. Bei einer solchen Bemaßung ist die Front des Herdes fluchtend mit Fronten von benachbarten Küchenmöbeln ausgerichtet.

Die Anzeigeeinheit 2 weist eine Glasabdeckung 18 auf, die mit einem Klebeband 20 an einem Gehäuse 22 der Anzeigeeinheit 2 befestigt ist. Das Klebeband 20 ist wie ein Rahmen geformt und befestigt die Glasabdeckung 18 an ihren Außenbereichen am Gehäuse 22. Das Gehäuse 22 ist nach vorne zur Glasabdeckung hin bis auf den Randbereich offen und nach oben zur Arbeitsplatte 12 hin abgeschlossen. Im zur Leiste 14 gewendeten hinteren Bereich der Anzeigeeinheit 2 dient ein erster Abschnitt 24 eines Abdeckblechs 26 als erster Abschnitt 24 des Gehäuses 22, der einen senkrecht zur Glasabdeckung 18 gesehen flachen ersten Bereich 28 begrenzt. Dieser erste flache Bereich 28 weist eine Tiefe von 19 mm auf, wobei als Tiefe die Ausdehnung der Anzeigeeinheit 2 senkrecht zur Glasabdeckung 18 verstanden wird. Ein zweiter Abschnitt 30 des Abdeckblechs 26 dient als zweiter Abschnitt 30 des Gehäuses 22 und begrenzt einen zweiten Bereich 32 der Anzeigeeinheit 2, der um etwa 5 mm tiefer ist als der erste Bereich 28. Das Abdeckblech 26 weist außerdem noch einen dritten Abschnitt 34 auf, der einen dritten Bereich 36 begrenzt, der eine relativ zum ersten Bereich 28 und zweiten Bereich 32 sehr große Tiefe aufweist.

Der erste und 19 mm tiefe Bereich 28 erstreckt sich über die gesamte Länge der Kante 4 der Glasabdeckung 18 und somit der Anzeigeeinheit 2. Die Kante 4 ist in der vertikal ausgerichteten Anzeigeeinheit 2 nach oben weisend, so dass sich der erste und flache Bereich 28 am oberen Ende der Anzeigeeinheit 2 befindet. Hierdurch kann der obere Bereich der Front bis fast zur Kante 4 zur Anzeige von Informationen für einen Bediener verwendet werden.

Innerhalb des dritten Bereichs 36 ist eine Leiterplatte 38 angeordnet, die eine Anzahl von Elektronikbauteilen 40 trägt. Die Leiterplatte 38 erstreckt sich vom dritten Bereich 36 durch den zweiten Bereich 32 hindurch bis in den ersten Bereich 28 hinein. Während die Leiterplatte 38 sowohl im dritten Bereich 36 als auch im zweiten Bereich 32 beidseitig mit Elektronikbauteilen 40 bestückt ist, trägt sie im ersten Bereich 28 nur auf der dem ersten Abschnitt 24 des Gehäuses 22 abgewandten Seite Elektronikbauteile 40. Die Leiterplatte 38 ist im ersten Bereich 28 somit nur einseitig mit Elektronikbauteilen 40 bestückt. Der Abstand zwischen dem ersten Abschnitt 24 des Gehäuses 22 und der Leiterplatte 38 einschließlich der Elektronikbauteile 40 ist wesentlich geringer als der Abstand der Leiterplatte 38 einschließlich Elektronikbauteile 40 zum zweiten Abschnitt 30 des Gehäuses 22. Da die Leiterplatte 38 im ersten Bereich 28 auf der dem ersten Abschnitt 24 zugewandten Seite keine Elektronikbauteile 40 trägt, kann dort der Abstand zum Gehäuse 22 gering gehalten werden, ohne dass das Problem auftritt, dass sich Ströme aus der Leiterplatte 38 oder den Elektronikbauteilen 40 über Kriechstrecken und Luftstrecken auf das Gehäuse 22 übertragen. Während die Leiterplatte 38 auf ihrem gesamten sich durch den ersten Bereich 28 erstreckenden Teil nur einseitig mit Elektronikbauteilen 40 bestückt ist, ist sie im zweiten Bereich 32 und dritten Bereich 36 beidseitig mit Elektronikbauteilen 40 bestückt.

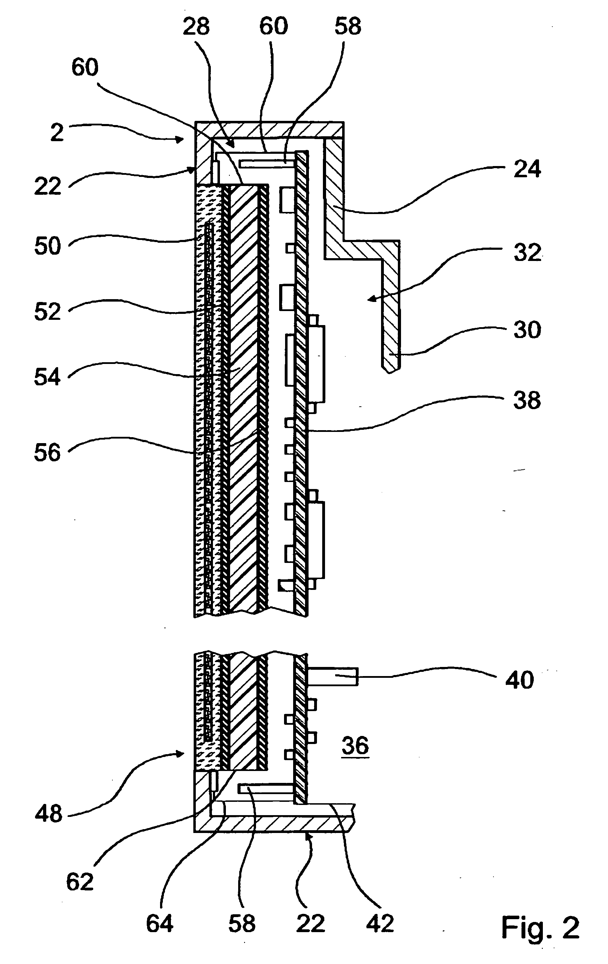

Innerhalb des dritten Bereichs 36 ist die Leiterplatte 38 über eine Drahtbrücke 42 mit einer Zusatzleiterplatte 44 verbunden, die weitere Elektronikbauteile 46 trägt. Zwischen der Leiterplatte 38 und der Glasabdeckung 18 ist ein Anzeigeelement 48 befestigt, das in einer detaillierteren Form in Fig. 2 dargestellt ist. Der erste und zweite Abschnitt 24, 30 des Gehäuses 22 sind parallel zum Anzeigeelement ausgerichtet.

Fig. 2 zeigt eine schematische Schnittdarstellung durch Teile der Anzeigeeinheit 2. Gleiche Bauteile sind mit gleichen Bezugszeichen versehen. Das Anzeigeelement 48 umfasst ein Anzeigefeld 50, das als Flüssigkristallanzeige ausgebildet ist. Das Anzeigefeld 50 ist in Sandwichbauweise mit einer Streufolie 52, einem Lichtleiter 54 und einer Reflektorfolie 56 verbunden. Hierbei sind das Anzeigefeld 50, die Streufolie 52, der Lichtleiter 54 und die Reflektorfolie 56 jeweils flach aufeinander gelegt und beispielsweise durch Klebung miteinander verbunden. Alle vier Bauteile sind parallel zueinander ausgerichtet. Ebenfalls parallel zu den vier Bauteilen und somit zum Anzeigeelement 48 ist die Leiterplatte 38 ausgerichtet, die oberhalb und unterhalb des Lichtleiters 54 angeordnete Lichtquellen 58 trägt. Hierbei sind jeweils oberhalb und unterhalb des Lichtleiters 54 sechs Lichtquellen 58 waagrecht auf der Leiterplatte 38 angeordnet, die jeweils in die obere bzw. untere Schmalseite 60, 62 des Lichtleiters 54 sichtbares Licht einstrahlen. Die Lichtquellen 58 sind als Licht emittierende Dioden ausgestaltet, die Licht im roten Frequenzbereich aussenden. Das in den Lichtleiter 54 eingestrahlte Licht aus den Lichtquellen 58 wird an der weißen Reflektorfolie 56 reflektiert und gelangt, gestreut durch die Streufolie 52, größtenteils zum Anzeigefeld 50. Das Anzeigefeld 50 weist in einem betriebenen Zustand lichtdurchlässige und im Wesentlichen lichtundurchlässige Bereiche auf, so dass der Blick eines Bedieners zwischen dunklen und im Wesentlichen lichtundurchlässigen Bereichen hindurch auf rote lichtdurchlässige Bereiche fällt. Es können somit rotstrahlende Symbole, Zahlen oder Buchstaben auf schwarzem Grund erzeugt werden. Das Anzeigefeld 50 ist mit Drahtverbindungen 64 mit der Leiterplatte 38 verbunden und parallel zur Glasabdeckung 18 (Fig. 1) ausgerichtet.

Das Anzeigefeld 50, die Streufolie 52, der Lichtleiter 54 und die Reflektorfolie 56 reichen ebenso wie die Leiterplatte 38 vom dritten Bereich 36 durch den zweiten Bereich 32 bis in den ersten Bereich 28 hinein. Hierdurch wird eine Anzeige von Zeichen auf dem Anzeigefeld 50 auch im oberen und schmalen ersten Bereich 28 ermöglicht. Damit der Lichtleiter 54 möglichst gleichmäßig mit Licht ausgestrahlt wird, sind Lichtquellen 58 sowohl im ersten Bereich 28 als auch im dritten Bereich 36 angeordnet. Es ist jedoch genauso gut möglich, die Lichtquellen 58 nur an einer seitlichen Schmalseite 60, 62 des Lichtleiters 54 anzuordnen, beispielsweise nur oben oder nur seitlich.

Das in den Figuren dargestellte und beschriebene Ausführungsbeispiel zeigt sowohl einen Lichtleiter 54, der zur Leitung von Licht von den Lichtquellen 58 zum Anzeigefeld 50 vorgesehen ist, als auch ein Gehäuse 22, das mit einem ersten Abschnitt 24 einen senkrecht zum Anzeigefeld 50 flachen ersten Bereich 28 und mit einem zweiten Abschnitt 30 einen senkrecht zum Anzeigefeld 50 tieferen zweiten Bereich 32, 36 begrenzt, wobei sich die Leiterplatte 38 vom zweiten Bereich 32, 36 in den ersten Bereich 28 erstreckt.

### Bezugszeichen

- 2: Anzeigeeinheit
- 4: Kante
- 6: Kochmulde
- 8: Ofenmuffel
- 10: Tür
- 12: Arbeitsplatte
- 14: Leiste
- 16: Kante
- 18: Glasabdeckung
- 20: Klebeband
- 22: Gehäuse
- 24: Abschnitt
- 26: Abdeckblech
- 28: Bereich
- 30: Abschnitt
- 32: Bereich
- 34: Abschnitt
- 36: Bereich
- 38: Leiterplatte
- 40: Elektronikbauteil
- 42: Drahtbrücke
- 44: Zusatzleiterplatte
- 46: Elektronikbauteil
- 48: Anzeigeelement
- 50: Anzeigefeld
- 52: Streufolie
- 54: Lichtleiter
- 56: Reflektorfolie
- 58: Lichtquelle
- 60: Schmalseite
- 62: Schmalseite
- 64: Drahtverbindung

## Patentansprüche

1. Anzeigeeinheit (2) für ein Haushaltsgerät, insbesondere für ein Gargerät, mit einem Anzeigefeld (50), einer Lichtquelle (58), und einem Lichtleiter (54), der zur Leitung von Licht von der Lichtquelle (58) zum Anzeigefeld (50) vorgesehen ist,
wobei die Anzeigeeinheit (2) eine Elektronikbauteile (40) tragende Leiterplatte (38) und ein Gehäuse (22) aufweist, das nach vorne zu einer Glasabdeckung (18) hin bis auf einen Randbereich offen und nach oben hin abgeschlossen ist und das mit einem ersten Abschnitt (24) einen senkrecht zum Anzeigefeld (50) flachen oberen ersten Bereich (28) und mit einem zweiten Abschnitt (30) einen senkrecht zum Anzeigefeld (50) tieferen unten an den ersten Bereich (28) angrenzend zweiten Bereich (32) begrenzt, dass sich die Leiterplatte (38) vom zweiten Bereich (32) in den ersten Bereich (28) erstreckt, dass das Anzeigefeld (50) und der Lichtleiter (54) flächig ausgebildet und parallel zueinander ausgerichtet sind und hinter der Glasabdeckung (18) angeordnet sind, dass sich das Anzeigefeld (50) und der Lichtleiter (54) vom zweiten Bereich (32) in den ersten Bereich (28) erstreckt, und dass die Anzeigeeinheit (2) eine Dicke von maximal 22 mm, insbesondere maximal 19 mm, im ersten Bereich (28) aufweist.

2. Anzeigeeinheit (2) nach-Anspruch 1, **dadurch gekennzeichnet, dass** die Lichtquelle (58) an einer seitlichen Schmalseite (60, 62) des Lichtleiters (54) angeordnet ist.

3. Anzeigeeinheit (2) nach einem der vorhergehenden Ansprüche, **dadurch gekennzeichnet, dass** das Anzeigefeld (50) durch eine Flüssigkristallanzeige gebildet ist.

4. Anzeigeeinheit (2) nach einem der vorhergehenden Ansprüche, **dadurch gekennzeichnet, dass** zwischen dem Anzeigefeld (50) und dem Lichtleiter (58) eine Lichtstreuvorrichtung, insbesondere eine Streufolie (52), angeordnet ist.

5. Anzeigeeinheit (2) nach einem der vorhergehenden Ansprüche, **dadurch gekennzeichnet, dass** das Anzeigefeld (50) und der Lichtleiter (54) in Sandwichbauweise miteinander verbunden sind.

6. Anzeigeeinheit (2) nach einem der vorhergehenden Ansprüche, **gekennzeichnet durch** eine parallel zum Lichtleiter (54) angeordnete und die Lichtquelle (58) tragende Leiterplatte (38).

7. Anzeigeeinheit (2) nach einem der vorhergehenden Ansprüche, **dadurch gekennzeichnet, dass** die Leiterplatte (38) zumindest im ersten Bereich (28) nur einseitig mit Elektronikbauteilen (40) bestückt ist.

8. Anzeigeeinheit (2) nach einem der vorhergehenden Ansprüche, **dadurch gekennzeichnet, dass** die Leiterplatte (38) zumindest im ersten Bereich (28) eine Lichtquelle (58) trägt.

9. Anzeigeeinheit (2) nach einem der vorhergehenden Ansprüche, **dadurch gekennzeichnet, dass** die Leiterplatte (38) im zweiten Bereich (32, 36) beidseitig mit Elektronikbauteilen (40) bestückt ist.

10. Anzeigeeinheit (2) nach einem der vorhergehenden Ansprüche, **gekennzeichnet durch** eine Kante (4), wobei der erste flache Bereich (28) entlang der Kante (4), insbesondere entlang der ganzen Kante (4), angeordnet ist.

11. Anzeigeeinheit (2) nach einem der vorhergehenden Ansprüche, **gekennzeichnet durch** eine mit der Leiterplatte (38) verbundene Zusatzleiterplatte (44), die im zweiten Bereich (36) angeordnet ist.

## Claims

1. Indicating unit (2) for a domestic appliance, particularly for a cooking appliance, with a display field (50), a light source (58) and an optical waveguide (54), which is provided for conducting light from the light source (58) to the display field (50), wherein the indicating unit (2) comprises a circuitboard (38), which carries electronic components (40), and a housing (22), which is open at the front towards a glass cover (18) as far as an edge region and is closed upwardly and which bounds by a first section (24) a flat upper first region (28) perpendicular to the display field (50) and by a second section (30) a deeper, lower second region (32) which is perpendicular to the display field (50) and downwardly adjoins the first region (28), the circuitboard (38) extends from the second region (32) into the first region (28), the display field (50) and the optical waveguide (54) of are of areal construction and oriented parallel to one another and are arranged behind the glass cover (18), the display field (50) and the optical waveguide (54) extends from the second region (32) into the first region (28) and the indicating unit (2) has a thickness of at most 22 millimetres, particularly at most 19 millimetres, in the first region (28).

2. Indicating unit (2) according to claim 1, **characterised in that** light source (58) is arranged at a lateral narrow side (60, 62) of the optical waveguide (54).

3. Indicating unit (2) according to one of the preceding claims, **characterised in that** the display field (50) is formed by a liquid-crystal display.

4. Indicating unit (2) according to one of the preceding claims, **characterised in that** an optical dispersion device, particularly a dispersion film (52), is arranged between the display field (50) and the optical waveguide (58).

5. Indicating unit (2) according to one of the preceding claims, **characterised in that** the display field (50) and the optical waveguide (54) are connected together in sandwich mode of construction.

6. Indicating unit (2) according to one of the preceding claims, **characterised by** a circuitboard (38) arranged parallel to the optical waveguide (54) and carrying the light source (58).

7. Indicating unit (2) according to one of the preceding claims, **characterised in that** the circuitboard (38) is equipped at least in the first region (28) with electronic components (40) on only one side.

8. Indicating unit (2) according to one of the preceding claims, **characterised in that** the circuitboard (38) carries a light source (58) at least in the first region (28).

9. Indicating unit (2) according to one of the preceding claims, **characterised in that** the circuitboard (38) is equipped in the second region (32, 36) with electronic components (40) on both sides.

10. Indicating unit (2) according to one of the preceding claims, **characterised by** an edge (4), wherein the first flat region (28) is arranged along the edge (4), particularly along the entire edge (4).

11. Indicating unit (2) according to one of the preceding claims, **characterised by** an additional circuitboard (44) which is connected with the circuitboard (38) and arranged in the second region (36).

## Revendications

1. Unité d'affichage (2) pour un appareil ménager, en particulier pour un appareil de cuisson, avec une zone d'affichage (50), une source lumineuse (58), et un conducteur de lumière (54) qui est prévu pour conduire la lumière de la source lumineuse (58) à la zone d'affichage (50),
l'unité d'affichage (2) présentant une plaque conductrice (38) portant des composants électroniques (40) et un boîtier (22), qui est ouvert vers l'avant en un vitrage en verre (18) jusqu'à une zone marginale et est fermé vers le haut et qui limite par une première section (24) une première zone supérieure plate (28) perpendiculairement à la zone d'affichage (50) et par une deuxième section (30) une deuxième zone (32) plus profonde perpendiculairement à la zone d'affichage (50) adjacente sous la première zone (28), la plaque conductrice (38) s'étendant de la deuxième zone (32) dans la première zone (28), la zone d'affichage (50) et le conducteur de lumière (54) étant conçus en plan et orientés parallèlement l'un à l'autre et étant agencés derrière le vitrage en verre (18), la zone d'affichage (50) et le conducteur de lumière (54) s'étendant de la deuxième zone (32) dans la première zone (28), et l'unité d'affichage (2) présentant une épaisseur de 22 mm au maximum, en particulier 19 mm au maximum, dans la première zone (28).

2. Unité d'affichage (2) selon la revendication 1, **caractérisée en ce que** la source lumineuse (58) est agencée sur un petit côté latéral (60, 62) du conducteur de lumière (54).

3. Unité d'affichage (2) selon l'une des revendications précédentes, **caractérisée en ce que** la zone d'affichage (50) est formée par un affichage à cristaux liquides.

4. Unité d'affichage (2) selon l'une des revendications précédentes, **caractérisée en ce qu'**entre la zone d'affichage (50) et le conducteur de lumière (58) est agencé un dispositif de diffusion de la lumière, en particulier une feuille de diffusion (52).

5. Unité d'affichage (2) selon l'une des revendications précédentes, **caractérisée en ce que** la zone d'affichage (50) et le conducteur de lumière (54) sont reliés ensemble selon une construction en sandwich

6. Unité d'affichage (2) selon l'une des revendications précédentes, **caractérisée par** une plaque conductrice (38) agencée parallèlement au conducteur de lumière (54) et portant la source lumineuse (58).

7. Unité d'affichage (2) selon l'une des revendications précédentes, **caractérisée en ce que** la plaque conductrice (38) est munie au moins dans une première zone (28) d'un seul côté uniquement de composants électroniques (40).

8. Unité d'affichage (2) selon l'une des revendications précédentes, **caractérisée en ce que** la plaque conductrice (38) porte au moins dans une première zone (28) une source lumineuse (58).

9. Unité d'affichage (2) selon l'une des revendications précédentes, **caractérisée en ce que** la plaque conductrice (38) est munie dans une deuxième zone (32, 36) des deux côtés de composants électroniques (40).

10. Unité d'affichage (2) selon l'une des revendications précédentes, **caractérisée par** une arête (4), la première zone plate (28) étant disposée le long de l'arête (4), en particulier le long de l'arête entière (4).

11. Unité d'affichage (2) selon l'une des revendications précédentes, **caractérisée par** une plaque conductrice supplémentaire (44) reliée à la plaque conductrice (38) qui est agencée dans une deuxième zone (36).
